Europäisches Patentamt

European Patent Office

Office européen des brevets

(19)

(11) EP 0 887 764 A2

## (12) EUROPEAN PATENT APPLICATION

(43) Date of publication:
30.12.1998 Bulletin 1998/53

(51) Int Cl.⁶: **G06K 17/00**

(21) Application number: 98500037.1

(22) Date of filing: 09.02.1998

(84) Designated Contracting States:
**AT BE CH DE DK ES FI FR GB GR IE IT LI LU MC NL PT SE**
Designated Extension States:
**AL LT LV MK RO SI**

(30) Priority: **27.06.1997 ES 9701428**

(71) Applicant: **TELEFONICA DE ESPANA, S.A.**
**28013 Madrid (ES)**

(72) Inventors:
• **Hernandez-Gil Gomez, José Felix**
**28020 Madrid (ES)**
• **Lopez Munoz, Joaquin Maria**
**28020 Madrid (ES)**

(74) Representative:
**Sanchez del Campo Gonzalez de Ubierna, Ramon et al**
**c/o Ballestero y Cia. S.L.,**
**Velàzquez, 87-1.o Dcha**
**28006 Madrid (ES)**

## (54) Document marker and reader

(57)    New document marker and reader, consisting of a device having inside a method or procedure for marking documents, both on physical support, that is to say, printings on paper, photographic negatives, slides, etc., and digitized documents electronically stored, that is to say, image files, video digital, etc., the marking being performed by inserting labels which can be repeated several times on the document, the mark made by these labels meeting different requirements, such as to be visually undiscernible and to be hardly removed or eliminated, while, on the other hand, their retrieval is only possible for the owner of the original and a marking cable, so securing the copyright holder to assert the validity of same in case of a possible violation of them, and degrading the document making it useless if someone tries to remove the labels.

**FIG.1**

**Description**

BACKGROUND OF THE INVENTION

The present specification relates to an application for a Patent of Invention referring to a new document marker and reader, both on a physical support, that is to say, printings on paper, photographic negatives, slides, etc., and digitized documents electronically stored, video digital, etc., the marking being performed by inserting labels, which can be repeated several times on the document, the mark made by these labels meeting different requirements, such as to be visually undiscernible and to be hardly removed or eliminated, - while on the other hand, their retrieval is only possible for the owner of the original and a marking cable, so securing the copyright holder to assert the validity of same in case of a possible violation of them, and degrading the document making it useless if someone - tries to remove the labels.

FIELD OF THE INVENTION

This invention will find application in the industry dedicated to produce, distribute and encode documents, with code masking, either printed on physical supports, or digitized and distributed in computerized environments and information networks.

RELATED ART

The digitization of every kind of information (audio, fixed images, video, etc.), enhanced by the increasing popularity of multimedia environments in the network, like the World Wide Web (WWW), poses the problem of generating schemes of copyright protection, so that authors can distribute their products in a safe way.

The digital information, due to its own nature, permits the replica and distribution of material in an inexpensive and indiscriminate way, from what the conventional schemes for protecting copyrights are ineffective.

Marking of documents have been performed adding a warning related to copyrights on the file headings where information is stored, but this information may be eliminated by simply changing the format, or erasing or altering the label, which does not affect the material itself.

That's why it is necessary that the labeling must be independent of the document format, and it must be also inherently related to the information to be protected.

An analogy of that desired to attain is that of the marking of paper money with the so-called watermarks.

Accordingly, a mark must combine, therefore, a series of requirements, such as, namely:

- The mark must be invisible, or, at least, indetectable, if the original is not available, which also means that the marking process should not affect the image quality.

- The mark must withstand common treatment processes such as: format conversions, size change, low-pass filtering, colour corrections of shining intensity, elimination of portions, etc, as well as attacks directed to its elimination, at least up to such an extent that the mark elimination involves a so high degradation of the document quality that the product be useless.

- The mark must be irretrievable without the possesion of the original (not distributed) and a secret - key.

The Applicant is not aware of the existence of any marking procedure, method, system or device combining the above mentioned requirements, and, at the same time, being suitable for performing its function.

SUMMARY OF THE INVENTION

The new document marker and reader as proposed by the invention, constitutes per se an evident novelty in its application field, as it surpasses the posed problem, since it has, in its context, all the characteristics considered as suitable.

In a most definite way, the new document marker and reader of the invention is basically composed of a marker element and a reader element, the marker element - being a tool taking the original document, inserts a label having adequate properties, that is to say, invisible and offering a hard alteration, using a secret key, so producing a new document ready to be distributed.

Said document, after being handled by users, may arrive degraded at the end of the process, but if its wear is not excessive, the label retrieval is possible, so verifying the origin of the document, by inserting into the reading tool of the degraded document, the original and the secret key.

On the other hand, if someone tries to destroy the label marking a document, the result is a useless product, with which the consecutive copies of an original document bear a mark identifying it univocally, and they withstand, to a certain extent, the users action.

Both the marker and the reader are made in a same - element, which configures as a label marker-extractor, having elements for controlling the marking process, data input channels and data output channels.

The function of the label marker-extractor is to prepare the document to be marked, generating an adequate label and inserting it into the document, the result being a new marked document, ready to be distributed.

Likewise, the function of the reader is to perform a reverse process, retrieving the label.

The invention has two data input channels, one physical and one digital.

The physical data input channel receives data on physical supports and digitizes them, and, to this end, it is configured by a scanner accepting input data, which are converted, at the output, to a file having a format which is suitable for a later treatment. The second channel, to be exact the digital channel, is a file read unit (diskette or CD-ROM reader) and it accepts them to be transmitted to the label marker-extractor.

As for the data output channels, there are, also, two types, one of them being a digital channel, formed by a file printing unit, or servant of the corresponging network, and other named physical channel, - constituted by an output to a printer.

The functions of the label marker-extractor are, as already mentioned, the following, namely:

- Frequential conversion of documents.

- Label/label design generation.

- Mark/mark retrieval insertion.

In order to perform said functions, the label marker-extractor combines a series of circuital elements shaping the following functional modules, namely:

- Image sensors, type CCD (Coupled Charged Device) performing a digitization of image and configuring - modules of original image capture, and image capture to be compared.

- Programmed function cards or, for lack of them, manual programming through, for example, a keyboard, corresponding to this element the functions of secret key capture and marking label capture.

- Processors orientated towards signal processes DSP (Digital Signal Processor), each of them with a specific function, such as functions of:

- Selectors of discreet cosine transform (DCT) blocks.

- Aleatory number generator.

- Bose-Chadhuri-Hocquenghem (BCH) code coder-decoder (CODEC).

- Restorer of aleatory number chains.

- Selector of image components.

- Optimum detector of image components.

- Combined insertion marker

- Data delivery elements, performing marked image outlet module and marking label outlet module functions.

Basically, this process consists of a frequential conversion of image, previously splitted into blocks, by using a discreet cosine transform (DCT), selecting in the transformed image, some low frequency component ones, and among them those having a greater amplitude, in which the information of the label is inserted like a Gaussian white noise, by means of a bit chain conforming same, with a protection code against errors added.

The insertion is performed in a combined way, that is to say, couples of components are marked, so that the label nature is assigned as positive to a component, while the other one is assigned as negative, so attaining a simple retrieval thereof, paying only attention to the sign of this insertion.

Furthermore, the label is redundantly placed on the image, and although the choice of blocks and components is made in an aleatory manner, this is determined by - a key inserted in the process, that is to say, if performed for a same image several times, every time the mark would be placed on the same blocks and components.

The outcome of the process is a marked image, on - which the marking label is not visually discerned, but by carrying out a process analogous to that of marking, it is possible to retrieve said label, and even usual conversions on the image (intensity changes, enlargements, etc.) do not affect this retrieval, and to eliminate the label requires to modify so many components of image that the result of an attack in this sense is a useless product.

DESCRIPTION OF THE DRAWINGS

In order to complement this description and aid toa better understanding of the characteristics of the invention, the appending three sheets of drawings, which are a part of this specification, show, by way of illustrative and non-limiting example, the following:

Figure 1 corresponds to a scheme of the process followed by an image in the object of the invention, related to a new document marker and reader.

Figure 2 shows the structure of the marker/reader.

Figure 3 corresponds to a functional diagram of the invention as a label marker.

Figure 4 corresponds to an image marking flow diagram.

Figure 5 shows a functional diagram of the object of the invention as a label reader.

Figure 6 shows, lastly, a label read flow diagram.

DESCRIPTION OF A PREFERRED EMBODIMENT OF THE INVENTION

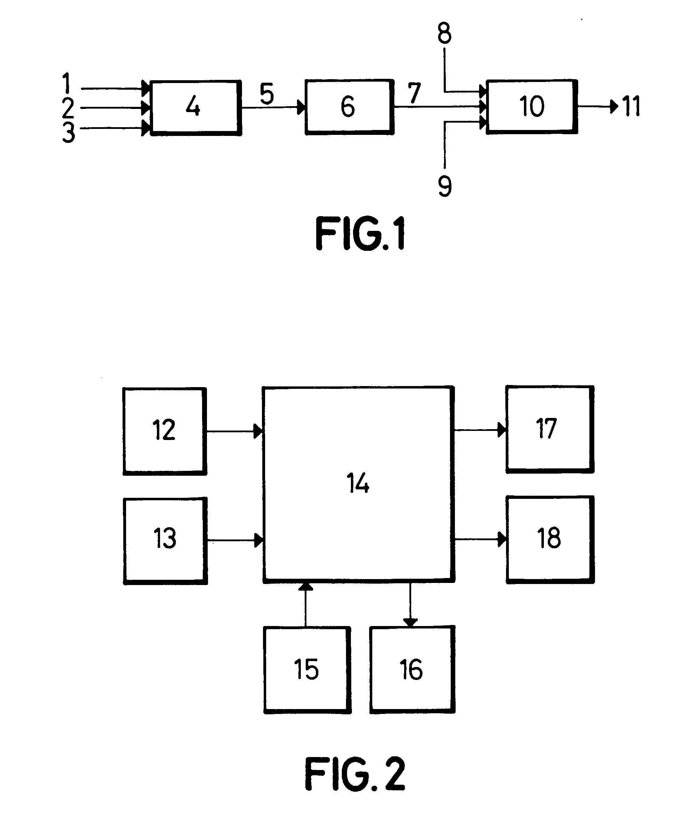

At the sight of these figures, it can be seen the manner in which the new document marker and reader as envisaged by the invention is configured, and specifically, following figure 1, it is seen the basic scheme of the usual process followed by the image as treated in the invention.

The marking tool (4) takes the original document (1) and inserts in it a given label (2), by using a secret key (3), and producing, as a result of that, a new document (5), ready to be distributed.

Said document (5), after being handled by users (6), arrives at the end of the process as a wear image (7); if the wear is not excessive, the label (11) retrieval is possible by inserting in the read tool (10) of said degraded image (7), the original secret key (8) and the original image (9).

With the label retrieval (11), and by comparison - with the inserted original label (2), the source of the image in question is ascertained, since the keys (3) and (8) are identical, as well as the original images (1) and (19).

Both the marker device (4) and the reader (10) are made and configured in a same body, as schematicaly shown in figure 2, wherein it can be seen the following, namely:

- Information input channels, there being a physical input (12), and a digital input (13).

- A label marker-extractor device (14).

- Peripheral elements, like as a keyboard (15) and a visualizer (16).

- Information output channels, specifically one physical output channel (17), and one digital output channel (18)

The physical data input channel (12) is shaped by a scanner acepting input documents, and delivering, at its output, a file of the appropiate format for being later treated by a label marker/extractor device (14).

The digital channel (13) is a file read unit (diskette or CD-ROM reader) transferring said files to the label marker-extractor (14).

The label marker-extractor device (14) transforms - the supplied file, so that it contains a label chosen (if operates as a marker), or it retrieves a label contained in the label (if operates in a read mode).

To perform the above mentioned operations, carried out by the label marker-extractor device (14), it is necessary to insert a key by means of a keyboard (15), and to follow the process through the visualizer (16).

Once the file has been transformed, this can have two output ways, that is to say, one way of physical data - (17), configured as a printer or analogous device, and one way of logic data output (18), which can be the network or any other printing device of the transformed - file.

Obviously, this means that an application of the described process can be incorporated in reprography systems, such as a photocopying machine or similar, as well as in the transmission in computerized networks.

As already mentioned, the label marker-extractor device (14) performs both the label marking function and the read and retrieval function thereof.

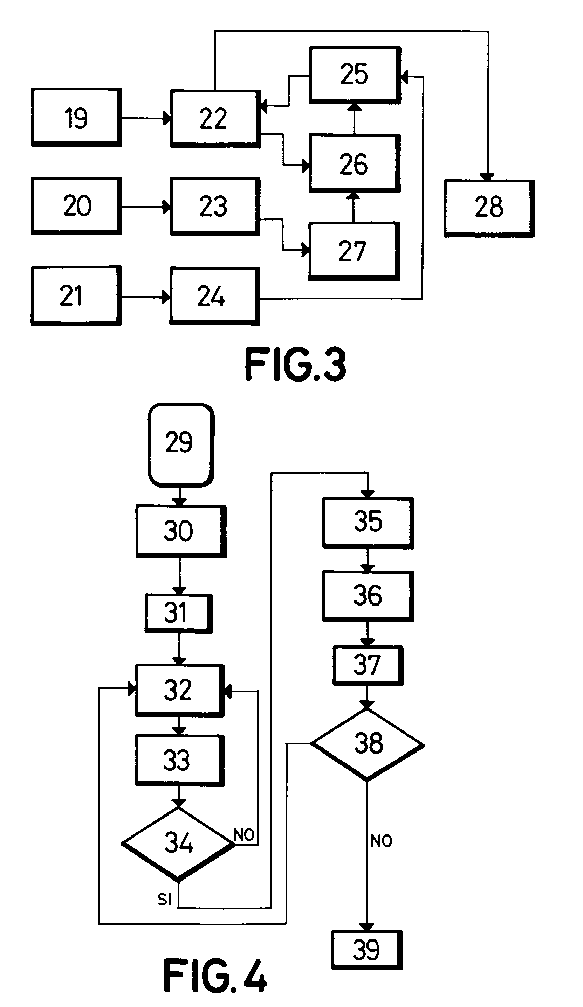

Following figure 3, this shows a configuration in functional blocks of the device, operating as image - marker, and, in this way, one can have:

- A module of original image capture (19), consisting of a image sensor, the function of which is to - store the image, and, if necessary because this image has not any more the adequate format, its conversion to blocks of 8x8 pixels, to which the discreet cosine transform is applied, according to the expression:

$$F(k,1)= _____ C(k) \, C(1) \sum \sum f(x,y) \cos_____ \cos\_\_\_\_ \qquad \text{(Expression I)}$$

where:
  $f(x,y)$ is the image block of 8x8 pixels.
  $F(k,1)$ is the transformed block.
  $C(k) = C(1) =_____ \_$ for K=1=0.
  $C(k) = C(1) = 1$ the opposite case.
  The so transformed image is delivered to a block selector DCT (22).

- A module of secret key capture (20), constituted by a programmed function card, the function of which is is to receive the bit chain of the secret key, and to transmit it later to an aleatory number generator (23), initialized with that key.

- A module of marking label capture (21), constituted by a programmed function card, and having the label to be placed on the image like a chain of k bits.
  $M = \{m_l ,..., m_k\}$
  con $m_i = b_i n_i$ , being $n_i = \alpha \, N(0,1)$ ;
  and the delivery to a redundancy code and error correction encoder, configured as a BCH coder (24), adding it a chain of (n-k) bits, these bits taking values of -1 or +1.

- A DCT block selector (22), configured as a handler of a signal aleatorily selected from image blocks, transformed according the discreet cosine transform, as possible candidates for receiving elements from the label.
  For it, it receives information from the aleatory number generator (23), with which the choice of blocks, although aleatory, is determined by said information, and therefore is only for each key.

- An aleatory number generator (23), that starting from the secret key, generates univocally an aleatory number collection of uniform distribution, and said collection shows, on the one hand, the positioning of the blocks selectable by the selector (22), and, on the other hand, it sends this same aleatory number collection of uniform distribution to a second aleatory number generator (27).

- A BCH coder (24), which is a processor oriented towards a digital signal processor (DSP), adding to the - bit chain of the label, the redundancy bits to lend it strengthen, giving that information to the combined insertion marker (25).

- A restored aleatory number generator (27), restoring the set of aleatory numbers so that they follow a normal statistical distribution N(0,1). In this way, the choice of a block and its later marking is obtained as a Gaussian white noise of difficult detection on the part of who want to alter it, and the restored information is delivered to the selector of valid components (26).

- A valid component selector (26), in which the components of image aleatorily chosen, that is to say, the set of restored aleatory numbers, meet, on the one hand, and on the basis of this information, the valid component selector (26) chooses DCT blocks, delivering this information to the combined insertion marker (25).

- Combined insertion marker (25), taking the components $(F_o, F_1)$, and inserting them a mark bit, which results in a block marked with the components $(F'_o, F'_1)$, where:

$$F'_0 = F_0 (1+m) \text{ and } F'_1 = F_1 (1-m) \qquad \text{(Expression II)}$$

returning these new marked blocks to the block selector (22), a new marked image being conformed or configuring there.

- Output module (28), receiving transformed blocks and reconstructing the image conformed by said blocks, so obtaining a visual appearance image identical to the original, but including a mark, and said image which is capable of being printed or transmitted in the network.

The overall marking process can be seen in the flow-chart shown in figure 4, where different steps are - shown as following, namely:

(29) → Start. Input: original image $0=(F_1,...,F_m)$, label $L=b_i,...b_k$ and the secret key K. The date collection is performed by the elements (19), (20) and (21).

(30) → Obtaining a modified label of a preestablished length, adding to the original label a code of n-k redundancy bits according the model BCH, the functional block (24) performing this operation.

(31) → i=l (beginning the process).

(32) → Selection of F (block of 8x8 pixels) aleatorily among the blocks of the original document not previously selected, this function being performed by the block selector (22)

(33) → It selects in an aleatory way two components from an image block $F_0 = F (k_0, 1_0)$ and $F_l = F (k_l, l_l)$ in the frequency zone, this being performed by the valid component selector (26).

(34) → It asks whether these selected components meet additional restrictions, being in general components with similar frequencies $(k_0 - k_l)$, $(1_0=1_l)$.

(35) → It obtains an aleatory number number distributed as per a normal distribution of typical deviation $\alpha$, and this deviation is performed by the aleatory number generator (23) and a second aleatory number generator (27).

(36) → It marks with the i-th bit of L' to $F_l$ and $F_0$ through the combined insertion method, so obtaining $F'_1 = F_0$ $(1+m)$; $F'_0 = F_0 (1-m)$, and this function is - performed by the combined insertion (25).

(37) → It moves one place i=i+l.

(38) → It asks about the end of the process $i \leq n$.

(39) → It returns a new document similar to the original document, constituted by markless blocks F and those marked F', so having a marked image, this being performed by the output module (28).

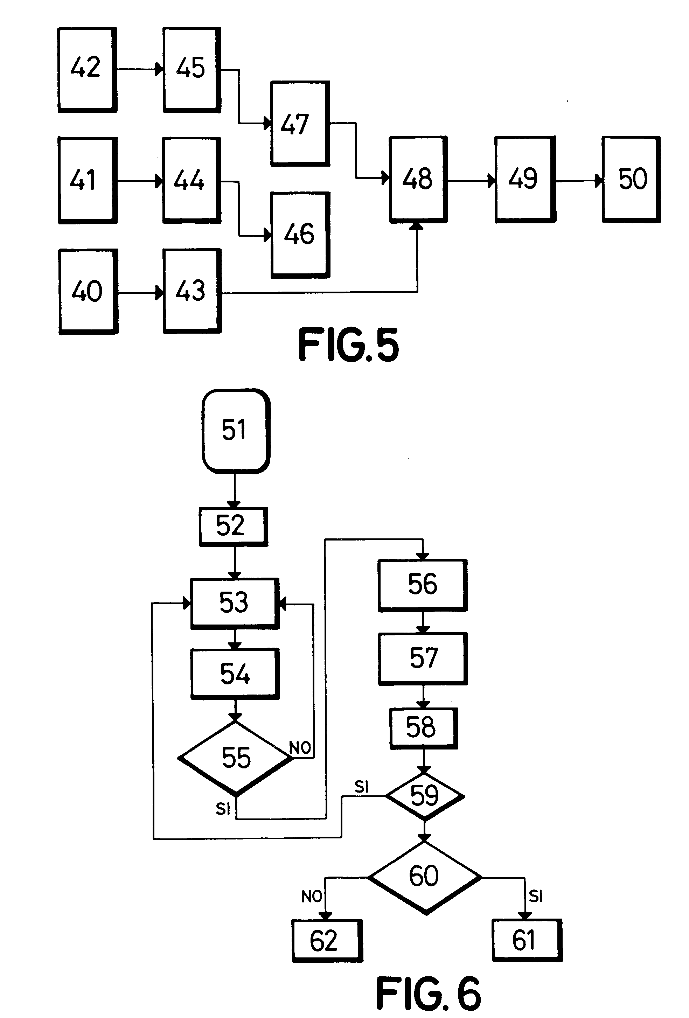

If an extraction of a marked image label is desired, there is a functional structure to this end, as seen in figure 5, which shows also:

- A marked image capture module (40), composed of an image sensor the function of which is to store the image marked (W') and its conversion to blocks of 8x8 pixels, to which the discreet cosine conversion is applied, according to the expression:

$$F(k,1) = \_\_\_\_\_ C(k) C(1) \sum \sum f(x,y) \cos _____ \cos _____ \qquad \text{(Expression I)}$$

where:
    f(x,y) is the image block of 8x8 pixels.
    F(k,1) is the transformed block.
    $C(k) = C(1) = _____$ in the case k=1=0.

C(k) = C(1) = in the opposite case.
The so transformed image is delivered to a block selector DCT (43).

- A secret key capture module (41), constituted by a programmed function card, the function of which is to - receive the bits chain of the secret key, and to transmit it to an aleatory number generator (44), initialized with that key.

- An original image capture module (42), constituted by an image sensor, the function of which is to store - the original image and its conversion to blocks of 8x8 - pixels, to which the discreet cosine conversion is applied according to the above expression, and the so - transformed image is delivered to a block selector DCT (45).

- A block selector (43), configured as a signal handler selecting, in an aleatory way, blocks of image transformed according to the DCT, capable of having label elements.

- An aleatory number generator (44), that, starting - from the secret key, generates in a univocal way a collection of aleatory numbers, and said collection shows, on the one hand, the positioning of the selectable blocks of the selector (45), and on the other hand, it sends that same collection to a second aleatory number generator (46).

- A block selector DCT (45) selecting, in an aleatory way, blocks of image transformed according to the DCT, capable of being marked with the label, and to this end it uses an information supplied by the aleatory number generator (44).

- A restored aleatory number generator (46), restoring the set of aleatory numbers so that they follow a normal statistical distribution $N(0,1)$, and it delivers the - restored information to a valid component selector (47).

- A valid component selector (47), in which, on the one hand, the aleatorily selected components of the orinal image, and on the other hand, the set of restored - aleatory numbers meet, and it selects, at the image - blocks, low frequency components capable of being marked.

- An optimum detector for combined insertions (48), selecting components $(F_0, F_1)$ of the original image, and it compares them with those corresponding on the marked image $(F'_o, F'_1)$, so that it collects any additional information possibly existing in these last components, said information containing both the label and the code of protection against errors.

- A decoder BCH (49), detecting the code of protection against errors, and eliminating it from the label.

- A label output module (50), showing the detected label.

The extracting process of the label can be seen in the flow-chart illustrated in figure 6, and said figure shows also the different steps to follow.

(51) - Start. Input: original image $0=(F_1,...,F_m)$, marked image $W=(F'_1,...,F'_m)$, and the secret key K. The collection of these data is performed by the marked image capture module (40), the secret key capture module - (41), and the original image capture module (42).

(52) - i=I (beginning of the process).

(53) - It selects K (block of 8x8 pixels, in an - aleatory way, among the blocks of the original documents not previously selected, and this step is performed by the block selector DCT (45).

(54) - It selects aleatorily two components from an image block $F_o = F(k_0, l_o)$ and $F_1 = F(k_1, l_l)$ at the low frequency zone, being performed by the valid component selector.

(55) - It requests whether these selected components meet with additional restrictions, basically that $(k_0 = k_1)$ and $(1_0 = _1)$.

(56) $\rightarrow$ It obtains an aleatory number, which is distributed according to a normal distribution of typical deviation $\alpha$, and this distribution is performed by the aleatory number generator (44), and the restored or normalized aleatory number generator (46).

(57) → It computes, starting from these data, the i-th bit of the components, by means of the expression: $b_1 = \text{sign}$ $(F_o'/F_0 - F_I'/F_I/\text{sign}(n_i))$ (Expression III), selected in the original document and the corresponding ones of the degraded document, this function being performed by the optimum detector for combined insertions (48), in case of the original image, and the block selector DCT (43), in case of a marked and degraded image.

(58) → It moves a place i=i+I.

(59) → It requests about the end of process i≤n.

(60) → It verifies whether the code of protection against errors is correct, and this is performed by the decoder BCH (49).

(61) → The code of protection against errors is correct, the marking label is retrieved, and this operation is performed by the label output module (50), which returns the retrieved label.

(62) → If the code of protection against errors is not correct, the label cannot be retrieved.

It is not considered necessary to extend this description for any expert in the art to understand the scope of the invention and the advantages derived from it.

The materials, shape, size and arrangement of its - components will be open to variation, provided that - it does not imply any alteration to the essence of the invention.

The terms under which this specification has been described should be always taken in an ample and non-limitative sense.

## Claims

1. A new document marker and reader, of those destined to mark documents configured in a same element, consisting of physical (12) and digital (13) input channels having a label marker-extractor (14), peripherals (15) and (16), as well as physical (17) and logic (18) output channels, **characterized** in that the label marker-extractor (14) has image sensors both of original image capture (19) and (42), and of marked image (40), having programmed function cards, with a secret key (20) or (41), and with a marking label - (21), relying on processors oriented towards a signal process, constituted by image block selectors (22) and (43), and aleatory number generator (23) or (44), as well as a coder-decoder of a code of protection against errors (24) or (49), an aleatory number chain restorer (27) or (46), an image component selector (26) or (47), an optimum detector of image components (48), and a combined insertion marker (45), relying at the same time on output data delivery elements, both of the marked image (28), and of the marking label (50), which processes the signal of the induced image by using spectral components thereof in an aleatory way, according to the key inserted, performing a marking on the document bearing it, - both on physical and digital support, with indelible and invisible labels, related to an information peculiar to the document, distributed all round the document in a redundant way.

2. A new document marker and reader, according to claim 1, **characterized** in that in case of arranging or converting the image to an appropiate digital format, it marks documents in a compact format without no need to decompress the corresponding file.

3. A new document marker and reader, according to the preceding claims, **characterized** in that it uses a selection method of two spectral components, based on selecting those components of a block of 8x8 pixels to which a discreet cosine transform (Expression I) has been applied, in a low frequency zone and with greater amplitudes, into which a combined mark is inserted (according to Expression II).

4. A new document marker and reader, according to the preceding claims, **characterized** in that the marking label is inserted with a method of binary message coding supporting it so that it may be a noncorrelated pseudoaleatory signal of a probability distribution having an amplitude given.

5. A new document marker and reader, according to the preceding claims, **characterized** in that the label insertion and extraction is performed by a method having a tolerance opposite to degradations and rangings of the spectral components according to a steady ratio.

6. A new document marker and reader, according to the preceding claims, **characterized** in that the label retrieval only needs a sufficient portion of the document and not in its entirety.

7. A new document marker and reader, according to the preceding claims, **characterized** in that the label retrieval is performed although other elements visible on the signal making up the document have been added.

8. A New document marker and reader, according to the preceding claims, **characterized** in that it is capable of being installed on photocopying machines or reprographic systems in general, and also to be incorporated in computer networks (type WEB), and in signal transmission of digital television.

9. A new document marker and reader, according to the preceding claims, **characterized** in that the mark is printed in accordance with the decision criterion pointed out in Expression III.

FIG.1

FIG.2

FIG.3

FIG.4

FIG.5

FIG.6